# EUROPEAN PATENT SPECIFICATION

(11) **EP 3 059 010 B1**
(45) Date of publication and mention of the grant of the patent: **27.09.2017**
(21) Application number: 16161570.3
(22) Date of filing: 07.10.2009
(51) Int. Cl.: B01J 20/14, B01J 20/28, B01J 20/30, C12H 1/048, B01D 15/00

(54) **PROCESSES FOR PREPARING DIATOMACEOUS EARTH PRODUCTS**
VERFAHREN ZUR HERSTELLUNG VON KIESELERDPRODUKTEN
PROCÉDÉS DE PRÉPARATION DE PRODUITS DE TERRE À DIATOMÉES

(30) Priority: 09.10.2008 US 104251 P
(43) Date of publication of application: 24.08.2016
(62) Divisional of application: 09819816.1
(73) Proprietor: Imerys Filtration Minerals, Inc., San Jose, CA 95112 (US)
(72) Inventor: WANG, Bo, Union City, CA 94587 (US)
(74) Representative: Rushton, David John

(56) References cited:
- EP-A1- 0 790 070
- WO-A1-2004/014547
- WO-A1-2008/131124
- US-A- 3 052 740
- US-A- 4 098 714
- US-A- 5 179 062
- US-A- 5 710 090
- FISCHER W ET AL: "Kieselguhr - calcined and cristobalite free. New methods for manufacture and use. (translated)", BRAUWELT 2003 GERCID GMBH, BERLIN, GERMANY, vol. 143, no. 16--17, 2003, page 522, XP009184389,

## Description

### Technical Field

Disclosed herein are diatomaceous earth products, processes for preparing diatomaceous earth products, and methods for using diatomaceous earth products.

### Background

Diatomaceous earth products are obtained from diatomaceous earth (also called "DE" or "diatomite"), which is generally known as a sediment enriched in biogenic silica (*i.e.*, silica produced or brought about by living organisms) in the form of siliceous skeletons (frustules) of diatoms. Diatoms are a diverse array of microscopic, single-celled, golden-brown algae generally of the class *Bacillariophyceae* that possess an ornate siliceous skeleton of varied and intricate structures comprising two valves that, in the living diatom, fit together much like a pill box.

Diatomaceous earth may form from the remains of water-borne diatoms and, therefore, diatomaceous earth deposits may be found close to either current or former bodies of water. Those depositions are generally divided into two categories based upon source: freshwater and saltwater. Freshwater diatomaceous earth is generally mined from dry lakebeds and may be characterized as having a low crystalline silica content and a high iron content. In contrast, saltwater diatomaceous earth is generally extracted from oceanic areas and may be characterized as having a high crystalline silica content and a low iron content.

In the field of filtration, many methods of particle separation from fluids employ diatomite products as filter aids. The intricate and porous structure unique to diatomite silica may be effective for the physical entrapment of particles in filtration processes. It is known to employ diatomite products to improve the clarity of fluids that contain suspended particles or particulate matter or exhibit turbidity.

In the field of filtration, methods of particle separation from fluids may employ diatomaceous earth products as filter aids. The intricate and porous structure unique to diatomaceous earth may, in some instances, be effective for the physical entrapment of particles in filtration processes. It is known to employ diatomaceous earth products to improve the clarity of fluids that exhibit turbidity or contain suspended particles or particulate matter.

Diatomaceous earth may be used in various embodiments of filtration. As a part of pre-coating, diatomaceous earth products may be applied to a filter septum to assist in achieving, for example, any one or more of: protection of the septum, improvement in clarity, and expediting of filter cake removal. As a part of body feeding, diatomaceous earth may be added directly to a fluid being filtered to assist in achieving, for example, either or both of: increases flow rate and extensions of the filtration cycle. Depending on the requirements of the specific separation process, diatomaceous earth may be used in multiple stages or embodiments including, but not limited to, in pre-coating and in body feeding.

Prior art diatomaceous earth products may suffer from any number of attributes that make them inappropriate, cause them to be less desirable, or cause them to have poor or improvable performance in a particular application, for instance in filtering applications. For example, prior art diatomaceous earth products may have at least one of high crystalline silica content, high impurity content, and low permeability. US 5,710,090 discloses a process for preparing a diatomaceous earth product comprising a step of agglomerating a diatomaceous earth material with an alkali silicate solution prior to calcination in order to reduce cristobalite content. There exists a need for improved diatomaceous earth products that exhibit better performance in a given application, such as lower impurity content and/or higher permeability in filtration applications.

### SUMMARY

The invention is as defined by the claims.

Disclosed herein are processes for preparing diatomaceous earth products comprising subjecting at least one natural diatomaceous earth to at least one agglomeration comprising at least one aluminate material, and to at least one heat treatment, in any order. Also disclosed herein are processes for preparing diatomaceous earth products comprising subjecting at least one natural diatomaceous earth material to at least one agglomeration comprising at least one aluminate material, and subjecting the agglomerated diatomaceous earth to at least one heat treatment. Further disclosed herein are processes for preparing diatomaceous earth products comprising subjecting at least one natural diatomaceous earth material to at least one heat treatment, and subjecting the heat-treated diatomaceous earth to at least one agglomeration comprising at least one aluminate material.

In one embodiment, the at least one aluminate material is at least one alkali metal aluminate. In another embodiment, the at least one aluminate material is at least one alkaline-earth metal aluminate. In a further embodiment, the at least one agglomeration comprises preparing at least one aqueous solution comprising the at least one aluminate material, and contacting the at least one natural diatomaceous earth material with the at least one aqueous aluminate solution. In yet another embodiment, the at least one heat treatment is calcination. In yet a further embodiment, the at least one heat treatment is calcination at a temperature ranging from about 600°C to about 900°C. In yet a further embodiment, the calcination can be for a time period ranging from about 15 minutes to about 45 minutes.

The disclosed diatomaceous earth product may have one or more beneficial attributes. In one embodiment, the diatomaceous earth product has a permeability ranging from about 0.2 darcy to about 3.0 darcy. In another embodiment, the diatomaceous earth product has a cristobalite content of less than about 1% by weight. In a further embodiment, the diatomaceous earth product has a quartz content of less than about 0.5% by weight.

Also disclosed herein are filter aid compositions comprising at least one diatomaceous earth product. Further disclosed herein are methods of filtering at least one liquid using at least one filter aid composition comprising at least one diatomaceous earth product. Further disclosed herein are calcined diatomaceous earth products comprising at least one aluminate material.

### BRIEF DESCRIPTION OF THE DRAWINGS

Figure 1A is a graph depicting pressure versus filtration time for the diatomaceous earth filter aid discussed in Example 16.
Figure 1B is a graph depicting turbidity versus filtration time for the diatomaceous earth filter aid discussed in Example 16.
Figure 2A is a graph depicting pressure versus filtration time for the diatomaceous earth filter aid discussed in Example 17.
Figure 2B is a graph depicting turbidity versus filtration time for the diatomaceous earth filter aid discussed in Example 17.
Figure 3A is a graph depicting pressure versus filtration time for the diatomaceous earth filter aid discussed in Example 18.
Figure 3B is a graph depicting turbidity versus filtration time for the diatomaceous earth filter aid discussed in Example 18.
Figure 4A is a graph depicting pressure versus filtration time for the diatomaceous earth filter aid discussed in Example 19.
Figure 4B is a graph depicting turbidity versus filtration time for the diatomaceous earth filter aid discussed in Example 19.

### DESCRIPTION OF THE EMBODIMENTS

This application describes, *inter alia,* diatomaceous earth products, processes for preparing diatomaceous earth products, and methods for using the diatomaceous earth products as, for example, filter aids. In one embodiment, the diatomaceous earth product has improved permeability compared to at least one natural diatomaceous earth from which it is made. In another embodiment, the diatomaceous earth product has improved permeability compared to at least one natural diatomaceous earth subjected only to at least one heat treatment, without agglomeration with at least one aluminate material. In a further embodiment, the diatomaceous earth product has a permeability comparable to that of diatomaceous earth products prepared without agglomeration by heat treatment (e.g., calcination or flux calcination) at a relatively higher temperature. In yet another embodiment, the diatomaceous earth product has a reduced crystalline silica content compared to diatomaceous earth products prepared without agglomeration by heat treatment (e.g., calcination or flux calcination) at a relatively higher temperature. In yet a further embodiment, the diatomaceous earth product has improved permeability compared to calcined or flux-calcined diatomaceous earth products. In still another embodiment, the diatomaceous earth product has reduced crystalline silica content and increase permeability compared to calcined or flux-calcined diatomaceous earth products.

In one embodiment, the diatomaceous earth product, when comprised in a filter aid composition, enhances filter aid performance compared to the filter aid composition itself. In another embodiment, the diatomaceous earth product, when comprised in a filter aid product, enhances filter aid performance compared to commercially available filter aids. In a further embodiment, the process disclosed herein achieves energy savings by reducing the calcination temperatures compared to the temperatures used in traditional and fluxed calcinations.

### Natural Diatomaceous Earth

Processes for preparing the diatomaceous earth products of the present inventions comprise at least one natural diatomaceous earth as a starting material. As used herein, the term "natural diatomaceous earth" means any diatomaceous earth material that has not been subjected to thermal treatment (e.g., calcination) sufficient to induce formation of greater than 1 % cristobalite. In one embodiment, the at least one natural diatomaceous earth is from a saltwater source. In another embodiment, the at least one natural diatomaceous earth is from a freshwater source. In a further embodiment, the at least one natural diatomaceous earth is any diatomaceous earth material that may be capable of use in a filter aid product, either in its crude form or after subjecting the material to one or more processing steps. In yet a further embodiment, the at least one natural diatomaceous earth is any diatomaceous earth material that has not been subjected to at least one thermal treatment. In still another embodiment, the at least one natural diatomaceous earth is any diatomaceous earth material that has not been subjected to calcination.

As stated earlier, natural diatomaceous earth is, in general, a sedimentary biogenic silica deposit comprising the fossilized skeletons of diatoms, one-celled algae-like plants that accumulate in marine or fresh water environments. Honeycomb silica structures generally give diatomaceous earth useful characteristics such as absorptive capacity and surface area, chemical stability, and low-bulk density. In one embodiment, natural diatomaceous earth comprises about 90% SiO₂ mixed with other substances. In another embodiment, crude diatomaceous earth comprises about 90% SiO₂, plus various metal oxides, such as but not limited to Al, Fe, Ca, and Mg oxides.

The at least one natural diatomaceous earth may have any of various appropriate forms now known to the skilled artisan or hereafter discovered. In one embodiment, the at least one natural diatomaceous earth is unprocessed (e.g., not subjected to chemical and/or physical modification processes). Without wishing to be bound by theory, the impurities in natural diatomaceous earth, such as clays and organic matters, may, in some embodiments, provide higher cation exchange capacity. In another embodiment, the at least one natural diatomaceous earth undergoes minimal processing following mining or extraction. In a further embodiment, the at least one natural diatomaceous earth is subjected to at least one physical modification process. The skilled artisan will readily know physical modification processes appropriate for use in the present inventions, which may be now known or hereafter discovered; appropriate physical modification processes include but are not limited to milling, drying, and air classifying. In yet another embodiment, the at least one natural diatomaceous earth is subjected to at least one chemical modification process. The skilled artisan will readily know chemical modification processes appropriate for use in the present inventions, which may be now known or hereafter discovered; appropriate chemical modification processes include but are not limited to, silanization. Silanization may be used to render the surfaces of the at least one natural diatomaceous earth either more hydrophobic or hydrophilic using the methods appropriate for silicate minerals. See U.S. Patent No. 3,915,735 and U.S. Patent No. 4,260,498, the contents of which are incorporated herein by reference in their entireties. In one embodiment useful for increasing hydrophobicity, the at least one natural diatomaceous earth is placed in a plastic vessel, and a small quantity of dimethyldichlorosilane (SiCl₂(CH₃)₂) or hexadimethylsilazane ((CH₃)₃Si-NH-Si(CH₃)₃) is added to the vessel. The reaction is allowed to take place at the at least one natural diatomaceous earth surface in the vapor phase over a 24-hour period. In one embodiment, hydrophobically enhanced diatomaceous earth according to the present inventions may have application in chromatographic compositions. In another embodiment, hydrophobically enhanced diatomaceous earth according to the present inventions, when used in conjunction with at least one additional hydrophobic material, may provide improved mechanical performance in applications involving hydrocarbons and/or oils. In a further embodiment, hydrophobically enhanced diatomaceous earth according to the present inventions, when used in conjunction with at least one additional hydrophobic material, may provide reinforcement in applications involving plastics and/or other polymers.

In one embodiment, the at least one natural diatomaceous earth is a commercially available diatomaceous earth product. In another embodiment, the at least one natural diatomaceous earth is Celite^{®} S available from World Minerals, Inc.

### Aluminate Material

The at least one natural diatomaceous earth material is subjected to at least one agglomeration with at least one aluminate material. In one embodiment, the at least one aluminate material is at least one alkali aluminate material. In another embodiment, the at least one aluminate material is at least one alkaline-earth aluminate material. In a further embodiment, the at least one natural diatomaceous earth material is agglomerated with at least one alkali aluminate material and at least one alkzline-earth aluminate material.

In one embodiment, the at least one alkali aluminate material is at least one sodium aluminate material. In another embodiment, the at least one alkali aluminate material is at least one potassium aluminate material. In another embodiment, the at least one alkali aluminate material is at least one lithium aluminate material.

In one embodiment, the at least one alkaline-earth aluminate material is at least one calcium aluminate material. In another embodiment, the at least one alkaline-earth material is at least one magnesium aluminate material.

### Agglomeration

Agglomeration of at least one natural diatomaceous earth material and at least one aluminate material, or of at least one heat treated diatomaceous earth and at least one aluminate material, may occur through any appropriate agglomeration process now known to the skilled artisan or hereafter discovered. In one embodiment, agglomeration comprises preparing at least one aqueous solution of the at least one aluminate material, and contacting the at least one aluminate solution with the at least one diatomaceous earth. One or more agglomerations may be performed, for example, when multiple aluminate materials, multiple diatomaceous earths, and/or multiple aluminate solutions are used.

In one embodiment, contacting comprises mixing an aluminate solution with at least one diatomaceous earth. In another embodiment, the mixing comprises agitation. In a further embodiment, at least one diatomaceous earth material and an aluminate solution are mixed sufficiently to at least substantially uniformly distribute the aluminate solution among the agglomeration points of contact of the at least one diatomaceous earth. In yet another embodiment, the at least one diatomaceous earth and the aluminate solution are mixed with sufficient agitation to at least substantially uniformly distribute the aluminate solution among the agglomeration points of contact of the at least one diatomaceous earth without damaging the structure of the diatomaceous earth. In yet a further embodiment, contacting comprises low-shear mixing.

In one embodiment, mixing occurs for about 1 hour. In another embodiment, mixing occurs for less than about 1 hour. In a further embodiment, mixing occurs for about 30 minutes. In yet another embodiment, mixing occurs for about 20 minutes. In yet a further embodiment, mixing occurs for about 10 minutes.

In one embodiment, mixing occurs at about room temperature, i.e., from about 20°C to about 23°C. In another embodiment, mixing occurs at a temperature of from about 20°C to about 50°C. In a further embodiment, mixing occurs at a temperature of from about 30°C to about 45°C. In yet another embodiment, mixing occurs at a temperature of from about 35°C to about 40°C.

In another embodiment, contacting comprises spraying at least one diatomaceous earth with at least one aluminate solution. In one embodiment, the spraying is intermittent. In another embodiment, the spraying is continuous. In a further embodiment, spraying comprises mixing the at least one diatomaceous earth while spraying with the at least one aluminate solution, for example, to expose different agglomeration points of contacts to the spray. In one embodiment, such mixing is intermittent. In another embodiment, such mixing is continuous.

In one embodiment, the at least one aluminate material is present in the at least one aluminate solution in an amount from less than about 40% by weight, relative to the weight of the at least one aluminate solution. In another embodiment, the at least one aluminate material ranges from about 1 % to about 10% by weight. In a further embodiment, the at least one aluminate material ranges from about 1% to about 5% by weight.

The at least one aqueous solution of the at least one aluminate material may be prepared with water. In one embodiment, the water is deionized water. In another embodiment, the water is ultrapure water. In a further embodiment, the water has been treated to remove or decrease the levels of metals, toxins, and/or other undesirable elements before it is contacted with the at least one aluminate material.

The amount of at least one aqueous solution contacted with the at least one diatomaceous earth may range from about 0.25 parts to about 1.5 parts of aqueous solution to one part DE. In an embodiment, about 1 part aqueous solution is contacted with about 1 part DE.

### Classification Step

Before and/or after the at least one agglomeration, the diatomaceous earth may, in some embodiments, be subjected to at least one classification step. Before and/or after the at least one heat treatment, the diatomaceous earth may, in some embodiments, be subjected to at least one classification step. In one embodiment, the particle size of the diatomaceous earth material is adjusted to a suitable or desired size using any one of several techniques well known in the art. In another embodiment, the diatomaceous earth material is subjected to at least one mechanical separation to adjust the powder size distribution. Appropriate mechanical separation techniques are well known to the skilled artisan and include, but are not limited to, milling, grinding, screening, extrusion, triboelectric separation, liquid classification, aging, and air classification.

### Heat Treatment

The natural diatomaceous earth or agglomerated diatomaceous earth is subjected to at least one heat treatment. Appropriate heat treatment processes are well-known to the skilled artisan, and include those now known or that may hereinafter be discovered. In one embodiment, the least one heat treatment decreases the amount of organics and/or volatiles in the heat-treated diatomaceous earth. In another embodiment, the at least one heat treatment is at least one calcination. In a further embodiment, the at least one heat treatment is at least one flux calcination. In yet another embodiment, the at least one heat treatment is at least one roasting.

Calcination may be conducted according to any appropriate process now known to the skilled artisan or hereafter discovered. In one embodiment, calcination is conducted at temperatures below the melting point of the at least one diatomaceous earth. In another embodiment, calcination is conducted at a temperature ranging from about 600°C to about 900°C. In a further embodiment, the calcination temperature ranges from about 600°C to about 700°C. In yet another embodiment, the calcination temperature ranges from about 700°C to about 800°C. In yet a further embodiment, the calcination temperature ranges from about 800°C to about 900°C. In still another embodiment, the calcination temperature is chosen from the group consisting of about 600°C, about 700°C, about 800°C, and about 900°C. Heat treatment at a lower temperature may result in an energy savings over other processes for the preparation of diatomaceous earth processes.

Flux calcination comprises conducting at least one calcination in the presence of at least one fluxing agent. Flux calcination may be conducted according to any appropriate process now known to the skilled artisan or hereafter discovered. In one embodiment, the at least one fluxing agent is any material now known to the skilled artisan or hereafter discovered that may act as a fluxing agent. In another embodiment, the at least one fluxing agent is a salt comprising at least one alkali metal. In a further embodiment, the at least one fluxing agent is chosen from the group consisting of carbonate, silicate, chloride, and hydroxide salts. In yet another embodiment, the at least one fluxing agent is chosen from the group consisting of sodium, potassium, rubidium, and cesium salts. In yet a further embodiment, the at least one fluxing agent is chosen from the group consisting of sodium, potassium, rubidium, and cesium carbonate salts.

Roasting may be conducted according to any appropriate process now known to the skilled artisan or hereafter discovered. In one embodiment, roasting is a calcination process conducted at a generally lower temperature that helps to avoid formation of crystalline silica in the diatomaceous earth. In another embodiment, roasting is conducted at a temperature ranging from about 450°C to about 900°C. In a further embodiment, the roasting temperature ranges from about 500°C to about 800°C. In yet another embodiment, the roasting temperature ranges from about 600°C to about 700°C. In yet a further embodiment, the roasting temperature ranges from about 700°C to about 900°C. In still another embodiment, the roasting temperature is chosen from the group consisting of about 450°C, about 500°C, about 600°C, about 700°C, about 800°C, and about 900°C.

It is within the scope of the present inventions to subject the at least one diatomaceous earth to at least one heat treatment, followed by agglomerating the heat treated diatomaceous earth with at least one aluminate material.

### Diatomaceous Earth Products

The diatomaceous earth products made by the processes described herein may have one or more beneficial attributes, making them desirable for use in one or a number of given applications. In one embodiment, the diatomaceous earth product is useful as part of a filter aid composition. In another embodiment, a filter aid composition comprises at least one diatomaceous earth product of the present inventions.

The diatomaceous earth products disclosed herein may have a permeability suitable for use in a filter aid composition. Permeability may be measured by any appropriate measurement technique now known to the skilled artisan or hereafter discovered. Permeability is generally measured in darcy units or darcy, as determined by the permeability of a porous bed 1 cm high and with a 1 cm² section through which flows a fluid with a viscosity of 1 mPa·s with a flow rate of 1 cm³/sec under an applied pressure differential of 1 atmosphere. The principles for measuring permeability have been previously derived for porous media from Darcy's law (see, for example, J. Bear, "The Equation of Motion of a Homogeneous Fluid: Derivations of Darcy's Law," in Dynamics of Fluids in Porous Media 161-177 (2nd ed. 1988)). An array of devices and methods are in existence that may correlate with permeability. In one exemplary method useful for measuring permeability, a specially constructed device is designed to form a filter cake on a septum from a suspension of filtration media in water; the time required for a specified volume of water to flow through a measured thickness of filter cake of known cross-sectional area is measured.

In one embodiment, the diatomaceous earth product has a permeability ranging from about 0.2 darcy to about 3.0 darcy. In another embodiment, the diatomaceous earth product has a permeability ranging from about 0.4 darcy to about 2.5 darcy. In a further embodiment, the diatomaceous earth product has a permeability ranging from about 0.2 darcy to about 0.4 darcy. In yet another embodiment, permeability ranges from about 0.5 darcy to about 1 darcy. In yet a further embodiment, the permeability ranges from about 1 darcy to about 2 darcy.

The diatomaceous earth products disclosed herein have a particle size. Particle size may be measured by any appropriate measurement technique now known to the skilled artisan or hereafter discovered. In one embodiment, particle size and particle size properties, such as particle size distribution ("psd"), are measured using a Leeds and Northrup Microtrac X100 laser particle size analyzer (Leeds and Northrup, North Wales, Pennsylvania, USA), which can determine particle size distribution over a particle size range from 0.12 µm to 704 µm. The size of a given particle is expressed in terms of the diameter of a sphere of equivalent diameter that sediments through the suspension, also known as an equivalent spherical diameter or "esd." The median particle size, or d₅₀ value, is the value at which 50% by weight of the particles have an esd less than that d₅₀ value. The d₁₀ value is the value at which 10% by weight of the particles have an esd less than that d₁₀ value. The d₉₀ value is the value at which 90% by weight of the particles have an esd less than that d₉₀ value.

In one embodiment, the d₁₀ of the diatomaceous earth product ranges from about 9 µm to about 15 µm. In another embodiment, the d₁₀ is less than about 20 µm. In a further embodiment, the d₁₀ is about 9 µm. In yet another embodiment, the d₁₀ is about 10 µm. In yet a further embodiment, the d₁₀ is about 11 µm. In still another embodiment, the d₁₀ is about 12 µm. In still a further embodiment, the d₁₀ is about 13 µm. In another embodiment, the d₁₀ is about 14 µm.

In one embodiment, the d₅₀ of the diatomaceous earth product ranges from about 20 µm to about 45 µm. In another embodiment, the d₅₀ ranges from about 25 µm to about 40 µm. In a further embodiment, the d₅₀ ranges from about 30 µm to about 35 µm.

In one embodiment, the d₉₀ of the diatomaceous earth product ranges from about 60 µm to about 100 µm. In another embodiment, the d₉₀ ranges from about 70 µm to about 90 µm. In a further embodiment, the d₉₀ ranges from about 75 µm to about 85 µm. In yet another embodiment, the d₉₀ ranges from about 80 µm to about 90 µm.

The diatomaceous earth products disclosed herein may have a low crystalline silica content. Forms of crystalline silica include, but are not limited to, quartz, cristobalite, and tridymite. In one embodiment, a diatomaceous earth product has a lower content of at least one crystalline silica than a calcined diatomaceous earth product not subjected to at least one agglomeration with at least one aluminate material.

The diatomaceous earth products disclosed herein may have a low cristobalite content. Cristobalite content may be measured by any appropriate measurement technique now known to the skilled artisan or hereafter discovered. In one embodiment, cristobalite content is measured by x-ray diffraction. Cristobalite content may be measured, for example, by the quantitative X-ray diffraction method outlined in H. P. Klug and L. E. Alexander, X-Ray Diffraction Procedures for Polycrystalline and Amorphous Materials 531-563 (2nd ed. 1972), which is incorporated by reference herein in its entirety. According to one embodiment of that method, a sample is milled in a mortar and pestle to a fine powder, then back-loaded into a sample holder. The sample and its holder are placed into the beam path of an X-ray diffraction system and exposed to collimated X-rays using an accelerating voltage of 40 kV and a current of 20 mA focused on a copper target. Diffraction data are acquired by step-scanning over the angular region representing the interplanar spacing within the crystalline lattice structure of cristobalite, yielding the greatest diffracted intensity. That region ranges from 21 to 23 2θ (2-theta), with data collected in 0.05 2θ steps, counted for 20 seconds per step. The net integrated peak intensity is compared with those of standards of cristobalite prepared by the standard additions method in amorphous silica to determine the weight percent of the cristobalite phase in a sample.

In one embodiment, the cristobalite content is less than about 1% by weight. In another embodiment, the cristobalite content is less than about 0.5% by weight. In a further embodiment, the cristobalite content is less than about 0.25% by weight. In yet another embodiment, the cristobalite content is less than about 0.15% by weight. In yet a further embodiment, the cristobalite content ranges from about 0.05% to about 1% In still another embodiment, the cristobalite content ranges from about 0.10% to about 0.25%. In still a further embodiment, a diatomaceous earth product has a lower cristobalite content than a heat-treated diatomaceous earth product not subjected to at least one agglomeration with at least one aluminate material.

The diatomaceous earth products disclosed herein may have a low quartz content. Quartz content may be measured by any appropriate measurement technique now known to the skilled artisan or hereafter discovered. In one embodiment, quartz content is measured by x-ray diffraction. For example, quartz content may be measured by the same x-ray diffraction method described above for cristobalite content, except the that 2θ region ranges from 26.0 to 27.5 degrees. In one embodiment, the quartz content is less than about 0.5% by weight. In another embodiment, the quartz content is less than about 0.25% by weight. In a further embodiment, the quartz content is less than about 0.1 % by weight. In yet another embodiment, the quartz content is about 0% by weight. In yet a further embodiment, the quartz content ranges from about 0% to about 0.5% by weight. In still another embodiment, the quartz content ranges from about 0% to about 0.25% by weight.

The diatomaceous earth products disclosed herein may have a measurable pore volume. Pore volume may be measured by any appropriate measurement technique now known to the skilled artisan or hereafter discovered. In one embodiment, pore volume is measured with an AutoPore IV9500 series mercury porosimeter from Micromeritics Instrument Corporation (Norcross, Georgia, USA), which can determine measure pore diameters ranging from 0.006 to 600 µm. As used to measure the pore volume of the diatomaceous earth products disclosed herein, that porosimeter's contact angle was set at 130 degree, and the pressure ranged from 0 to 33000 psi. In one embodiment, the pore volume is about equal to at least one natural diatomaceous earth from which it is made. In another embodiment, the pore volume ranges from about 2.5 mL/g to about 3.7 mL/g. In another embodiment, the pore volume ranges from about 2.7 mL/g to about 3.5 mL/g. In a further embodiment, the pore volume ranges from about 2.9 mUg to about 3.2 mL/g. In yet another embodiment, the pore volume is about 3.1 mUg.

The diatomaceous earth products disclosed herein may have a measurable median pore diameter. Median pore diameter may be measured by any appropriate measurement technique now known to the skilled artisan or hereafter discovered. In one embodiment, median pore diameter is measured an AutoPore IV 9500 series mercury porosimeter, as described above. In one embodiment, the median pore diameter ranges from about 4.5 µm to about 7.5 µm. In another embodiment, the median pore diameter ranges from about 4.5 µm to about 6 µm. In a further embodiment, the median pore diameter ranges from about 5.5 µm to about 7 µm.

The diatomaceous earth products disclosed herein may have a measurable wet density, which as used herein refers to measurement of centrifuged wet density. To measure wet density, a DE sample of known weight from about 1.00 to about 2.00 g is placed in a calibrated 15 ml centrifuge tube to which deionized water is added to make up a volume of approximately 10 ml. The mixture is shaken thoroughly until all of the sample is wetted, and no powder remains. Additional deionized water is added around the top of the centrifuge tube to rinse down any mixture adhering to the side of the tube from shaking. The tube is centrifuged for 5 min at 2500 rpm on an IEC Centra^{®} MP-4R centrifuge, equipped with a Model 221 swinging bucket rotor (International Equipment Company; Needham Heights, Massachusetts, USA). Following centrifugation, the tube is carefully removed without disturbing the solids, and the level (i.e., volume) of the settled matter is measured in cm³. The centrifuged wet density of powder is readily calculated by dividing the sample weight by the measured volume. In one embodiment, the wet density ranges from about 240 g/L (15 lb/ft³) to about 320 g/L (20 lb/ft³). In another embodiment, the wet density ranges from about 256 g/L (16 lb/ft³) to about 304 g/L (19 lb/ft³).

The diatomaceous earth products disclosed herein may comprise at least one soluble metal. As used herein, the term "soluble metal" refers to any metal that may be dissolved in at least one liquid. Soluble metals are known to those of skill in the art and include, but are not limited to, iron, aluminum, calcium, vanadium, chromium, copper, zinc, nickel, cadmium, and mercury. When a filter aid comprising diatomaceous earth are used to filter at least one liquid, at least one soluble metal may dissociate from the diatomaceous earth filter aid and enter the liquid. In many applications, such an increase in metal content of the liquid is undesirable and/or unacceptable. For example, when a filter aid comprising diatomaceous earth is used to filter beer, a high level or iron dissolved in the beer from the filter aid may adversely affect sensory or other properties, including but not limited to taste and shelf-life.

Any appropriate protocol or test for measuring levels of at least one soluble metal in diatomaceous earth products may be used, including those now known to the skilled artisan or hereafter discovered. For example, the brewing industry has developed at least one protocol to measure the BSI of diatomaceous earth filter aids. BSI, or beer soluble iron, refers to the iron content, which may be measured in parts per million, of a filter aid comprising diatomaceous earth that dissociates in the presence of a liquid, such as beer. The European Beverage Convention (EBC) method contacts liquid potassium hydrogen phthalate with the filter aid and then analyzes the liquid for iron content. More specifically, the EBC method uses, for example, a 10 g/L solution of potassium hydrogen phthalate (KHP, KC₈H₄O₄) as the extractant along with a given quantity of filter aid material, with a total contact time of two hours. Extracts are then analyzed for iron concentration by the FERROZINE method.

In one embodiment, the beer soluble iron of a diatomaceous earth product disclosed herein ranges from about 100 ppm to about 150 ppm, when measured using an EBC method. In another embodiment, the beer soluble iron ranges from about 100 ppm to about 120 ppm. In a further embodiment, the beer soluble iron ranges from about 110 ppm to about 120 ppm. In yet another embodiment, the beer soluble iron is less than about 150 ppm.

BSA, or beer soluble aluminum, refers to the aluminum content, which may be measured in parts per million, of a filter aid comprising diatomaceous earth that dissociates in the presence of a liquid, such as beer. BSA may be measured, for example, by tests similar to the EBC methods described above that have been appropriately modified to detect aluminum (such as through the use of spectrometry). In one embodiment, the beer soluble aluminum of a diatomaceous earth product disclosed herein range from about 350 ppm to about 850 ppm. In another embodiment, the beer soluble aluminum ranges from about 400 ppm to about 700 ppm. In a further embodiment, the beer soluble aluminum ranges from about 450 ppm to about 600 ppm. In yet another embodiment, the beer soluble aluminum is less than about 850 ppm.

BSC, or beer soluble calcium, refers to the calcium content, which may be measured in parts per million, of a filter aid comprising diatomaceous earth that dissociates in the presence of a liquid, such as beer. BSC may be measured, for example, by tests similar to the EBC methods described above that have been appropriately modified to detect calcium (such as through the use of spectrometry). In one embodiment, the beer soluble calcium of a diatomaceous earth product disclosed herein ranges from about 450 ppm to about 1200 ppm. In another embodiment, the beer soluble calcium ranges from about 450 ppm to about 850 ppm. In a further embodiment, the beer soluble calcium ranges from about 650 ppm to about 850 ppm. In yet another embodiment, the beer soluble calcium ranges from about 450 ppm to about 650 ppm. In yet a further embodiment, the beer soluble calcium is less than about 1200 ppm.

The diatomaceous earth products disclosed herein may have a measurable BET surface area. BET surface area, as used herein, refers to the technique for calculating specific surface area of physical absorption molecules according to Brunauer, Emmett, and Teller ("BET") theory. BET surface area may be measured by any appropriate measurement technique now known to the skilled artisan or hereafter discovered. In one embodiment, BET surface area is measured with a Gemini III 2375 Surface Area Analyzer, using pure nitrogen as the sorbent gas, from Micromeritics Instrument Corporation (Norcross, Georgia, USA). In one embodiment, the BET surface area is greater than at least one calcined and/or flux calcined diatomaceous earth product with similar permeability but not produced according to the inventions described herein (e.g., without agglomerating at least one natural diatomaceous earth material with at least one aluminate material). In another embodiment, BET surface area ranges from about 15 m²/g to about 50 m²/g. In a further embodiment, the BET surface area ranges from about 20 m²/g to about 45 m²/g. In yet another embodiment, the BET surface area is greater than about 20 m²/g.

### Uses for Diatomaceous Earth Products

The diatomaceous earth products disclosed herein may be used in any of a variety of processes, applications, and materials. In one embodiment, the diatomaceous earth products are used in at least one process, application, or material in which such a product with a high BET surface area is desirable.

In one embodiment, the diatomaceous earth product may be comprised in a filter aid material or composition. A filter aid composition comprising at least one diatomaceous earth product may optionally comprise at least one additional filter aid medium. Examples of suitable at least one additional filter aid media include, but are not limited to, natural or synthetic silicate or aluminosilicate materials, unimproved diatomaceous earth, saltwater diatomaceous earth, expanded perlite, pumicite, natural glass, cellulose, activated charcoal, feldspars, nepheline syenite, sepiolite, zeolite, and clay.

The at least one additional filter medium may be present in any appropriate amount. In one embodiment, the at least one additional filter medium is present from about 0.01 to about 100 parts of at least one additional filter medium per part of treated diatomaceous earth material. In another embodiment, the at least one additional filter medium is present from about 0.1 to about 10 parts. In a further embodiment, the at least one additional filter medium is present from about 0.5 to 5 parts.

The filter aid composition may be formed into sheets, pads, cartridges, or other monolithic or aggregate media capable of being used as supports or substrates in a filter process. Considerations in the manufacture of filter aid compositions may include a variety of parameters, including but not limited to total soluble metal content of the composition, median soluble metal content of the composition, particle size distribution, pore size, cost, and availability.

A filter aid composition comprising at least one thermally treated DE product may be used in a variety of processes and compositions. In one embodiment, the filter aid composition is applied to a filter septum to protect it and/or to improve clarity of the liquid to be filtered in a filtration process. In another embodiment, the filter aid composition is added directly to a beverage to be filtered to increase flow rate and/or extend the filtration cycle. In a further embodiment, the filter aid composition is used as pre-coating, in body feeding, or a combination of both pre-coating and body feeding, in a filtration process.

Thermally treated diatomaceous earth falter aid products of the present invention may also be used in a variety of filtering methods. In one embodiment, the filtering method comprises pre-coating at least one filter element with at least one thermally treated diatomaceous earth filter aid, and contacting at least one liquid to be filtered with the at least one coated filter element. In such an embodiment, the contacting may comprise passing the liquid through the filter element. In another embodiment, the filtering method comprises suspending at least one thermally treated diatomaceous earth filter aid in at least one liquid containing particles to be removed from the liquid, and then separating the filter aid from the filtered liquid.

Filter aids comprising at least one diatomaceous earth product of the present invention may also be employed to filter various types of liquids. The skilled artisan is readily aware of liquids that may be desirably filtered with a process comprising the filter aids comprising at least one diatomaceous earth product disclosed herein. In one embodiment, the liquid is a beverage. Exemplary beverages include, but are not limited to, vegetable-based juices, fruit juices, distilled spirits, and malt-based liquids. Exemplary malt-based liquids include, but are not limited to, beer and wine. In another embodiment, the liquid is one that tends to form haze upon chilling. In a further embodiment, the liquid is a beverage that tends to form haze upon chilling. In yet another embodiment, the liquid is a beer. In yet a further embodiment, the liquid is an oil. In still another embodiment, the liquid is an edible oil. In still a further embodiment, the liquid is a fuel oil. In another embodiment, the liquid is water, including but not limited to waste water. In a further embodiment, the liquid is blood. In yet another embodiment, the liquid is a sake. In yet a further embodiment, the liquid is a sweetener, such as for example corn syrup or molasses.

The diatomaceous earth products disclosed herein may also be used in applications other than filtration. In one embodiment, the DE products are used as composites in filler applications, such as for example fillers in constructions or building materials. In another embodiment, the DE products are used to alter the appearance and/or properties of paints, enamels, lacquers, or related coatings and finishes. In a further embodiment, the DE products are used in paper formulations and/or paper processing applications. In yet another embodiment, the DE products are used to provide anti-block and/or reinforcing properties to polymers. In yet a further embodiment, the DE products are used as or in abrasives. In still another embodiment, the DE products are used for buffing or in buffing compositions. In still a further embodiment, the DE products are used for polishing or in polishing compositions. In another embodiment, the DE products are used in the processing and/or preparation of catalysts. In a further embodiment, the DE products are used as chromatographic supports or other support media. In yet another embodiment, the DE products are blended, mixed, or otherwise combined with other ingredients to make monolithic or aggregate media useful in a variety of applications, including but not limited to supports (for example, for microbe immobilization) and substrates (for example, for enzyme immobilization).

### EXAMPLES

The results obtained from the following Examples 1-14 are illustrated in Tables 1 and 2 below. The effects of varying calcination temperatures and amounts of calcium aluminate on physical properties of the diatomaceous earth product are shown in Table 1. The effect of using different, smaller amounts of calcium aluminate while holding calcination temperature constant at 600°C is shown in Table 2. The comparable physical properties for Celite^{®} Standard Super Cel^{®} and Hyflo^{®} Super Cel^{®} products are also included (World Minerals, Inc., Santa Barbara, CA, USA). Celite^{®} Standard Super Cel^{®} is a commercially available calcined diatomite product; Celite^{®} Hyflo^{®} Super Cel^{®} is a commercially available soda ash flux-calcined diatomite product.

The particle size distributions of the starting, feed, intermediate, or finished products in Examples 1-14 were measured using a Leeds and Northrup Microtrac X100 laser particle size analyzer. The cristobalite and quartz contents were measured by x-ray diffraction using the Klug & Alexander method described above. The pore volume and median pore diameter were measured by mercury porosimetry using a AutoPore IV 9500 series porosimeter from Micromeritics (contact angle = 130 degrees; pressure ranging from 0 to 33000 psi). The wet density was measured by the centrifugal method described above. The permeability was measured by the method described above.

### Example 1

A commercially available Celite^{®} S diatomite product (originating from Mexico) was used as the feed DE material. This feed DE material had a particle size distribution of d₁₀ of 7.87 µm, d₅₀ of 22.94 µm, and d₉₀ of 62.12 µm. The cristobalite content was 0.18% by weight the quartz content was 0.17% by weight.

10 g of calcium aluminate (C270, Almatis) was dispersed in 200 g of water. 200 g of the DE feed material was then slowly added to the calcium aluminate solution with agitation. After mixing in a Hobart mixer for 20 minutes, the mixture was brushed through a 30-mesh (0.6 mm opening) screen. The oversize particles were broken and forced through the screen by brushing. After drying in a 150°C oven overnight, the agglomerated DE material had a particle size distribution of d₁₀ of 9.25 µm, d₅₀ of 23.57 µm, and d₉₀ of 56.46 µm.

30 g of the dried, agglomerated DE material was calcined at 600°C for 30 minutes. The calcined DE material was then screened through a 30-mesh (0.6 mm opening) screen by shaking to remove oversize particles. The finished product had a particle size distribution of d₁₀ of 11.86 µm, d₅₀ of 32.40 µm, and d₉₀ of 70.48 µm. The finished product had a cristobalite content of 0.20% by weight, a quartz content of 0.03% by weight, a pore volume of 3.346 mL/g, a median pore diameter of 4.6884 microns, a wet density of 18.35 pounds per cubic foot, a permeability of 1.04 Darcy, and a BET surface area of 26.3820 m²/g.

### Example 2

Example 1 was repeated using 20 g of calcium aluminate. The dried, agglomerated DE material was calcined at 600°C for 30 minutes. The calcined DE material was then screened through a 30-mesh (0.6 mm opening) screen by shaking to remove oversize particles. The finished product had a particle size distribution of d₁₀ of 11.41 µm, d₅₀ of 30.56 µm, and d₉₀ of 70.49 µm. The finished product had a cristobalite content of 0.22% by weight, a quartz content of 0.07% by weight, and a permeability of 1.09 Darcy.

### Example 3

Example 1 was repeated using 40 g of calcium aluminate. The dried, agglomerated DE material was calcined at 600°C for 30 minutes. The calcined DE material was then screened through a 30-mesh (0.6 mm opening) screen by shaking to remove oversize particles. The finished product had a particle size distribution of d₁₀ of 11.54 µm, d₅₀ of 30.56 µm, and d₉₀ of 76.56 µm. The finished product had a cristobalite content of 0.21 % by weight, a quartz content of 0.10% by weight, and a permeability of 0.82 Darcy.

### Example 4

Example 1 was repeated using 60 g of calcium aluminate. The dried, agglomerated DE material was calcined at 600°C for 30 minutes. The calcined DE material was then screened through a 30-mesh (0.6 mm opening) screen by shaking to remove oversize particles. The finished product had a particle size distribution of d₁₀ of 11.02 µm, d₅₀ of 25.61 µm, and d₉₀ of 64.93 µm. The finished product had a cristobalite content of 0.10% by weight and a permeability of 1.00 Darcy. The quartz content was below the detection limit.

### Example 5

Example 1 was repeated using 80 g of calcium aluminate. The dried, agglomerated DE material was calcined at 600°C for 30 minutes. The calcined DE material was then screened through a 30-mesh (0.6 mm opening) screen by shaking to remove oversize particles. The finished product had a particle size distribution of d₁₀ of 12.30 µm, d₅₀ of 29.48 µm, and d₉₀ of 85.24 µm. The finished product had a cristobalite content of 0.23% by weight and a permeability of 1.23 Darcy. The quartz content of the finished product was below the detection level.

### Example 6

30 g of the dried, agglomerated un-calcined DE material from Example 1 was calcined at 900°C for 30 minutes. The calcined DE material was then screened through a 30-mesh (0.6 mm opening) screen by shaking to remove oversize particles. The finished product had a particle size distribution of d₁₀ of 13.65 µm, d₅₀ of 38.11 µm, and d₉₀ of 79.54 µm. The finished product had a cristobalite content of 0.26% by weight, a quartz content of 0.17% by weight, a pore volume of 2.9219 mL/g, a median pore diameter of 7.0018 microns, a wet density of 18.35 pounds per cubic foot, a permeability of 1.55 Darcy, and a BET surface area of 21.2518 m²/g.

### Example 7

Example 1 was repeated using 20 g of calcium aluminate. The dried, agglomerated DE material was calcined at 900°C for 30 minutes. The calcined DE material was then screened through a 30-mesh (0.6 mm opening) screen by shaking to remove oversize particles. The finished product had a particle size distribution of d₁₀ of 13.62 µm, d₅₀ of 35.91 µm, and d₉₀ of 79.85 µm. The finished product had a cristobalite content of 0.24% by weight, a quartz content of 0.13% by weight, and a permeability of 1.76 Darcy.

### Example 8

Example 1 was repeated using 40 g of calcium aluminate. The dried, agglomerated DE material was calcined at 900°C for 30 minutes. The calcined DE material was then screened through a 30-mesh (0.6 mm opening) screen by shaking to remove oversize particles. The finished product had a particle size distribution of d₁₀ of 13.18 µm, d₅₀ of 34.74 µm, and d₉₀ of 84.34 µm. The finished product had a cristobalite content of 0.18% by weight, a quartz content of 0.05% by weight, and a permeability of 1.70 Darcy.

### Example 9

Example 1 was repeated using 60 g of calcium aluminate. The dried, agglomerated DE material was calcined at 900°C for 30 minutes. The calcined DE material was then screened through a 30-mesh (0.6 mm opening) screen by shaking to remove oversize particles. The finished product had a particle size distribution of d₁₀ of 12.94 µm, d₅₀ of 30.27 µm, and d₉₀ of 75.33 µm. The finished product had a cristobalite content of 0.15°/a by weight, a cristobalite content of 0.10% by weight, and a permeability of 2.33 Darcy.

### Example 10

Example 1 was repeated using 80 g of calcium aluminate. The dried, agglomerated DE material was calcined at 900°C for 30 minutes. The calcined DE material was then screened through a 30-mesh (0.6 mm opening) screen by shaking to remove oversize particles. The finished product had a particle size distribution of d₁₀ of 12.71 µm, d₅₀ of 35.45 µm, and d₉₀ of 66.34 µm. The finished product had a cristobalite content of 0.16% by weight and a permeability of 1.90 Darcy. The quartz content of the finished product was below the detection level.

**Table 1**

| Example | Calcium Aluminate (%) | Calcination Temperature (°C) | d₁₀ | d₅₀ | d₉₀ | Cristobalite (%) | Quartz (%) | Permeability (Darcy) |
|---|---|---|---|---|---|---|---|---|
| Standard Super-Cel^{®} | n/a | n/a | 7.53 | 18.92 | 55.73 | 17.99 | 0.86 | 0.21 |
| Celite S^{®} | n/a | 600 | | | | | | 0.05 |
| Celite S^{®} | n/a | 900 | | | | | | 0.06 |
| Hyflo Super-Cel^{®} | n/a | n/a | 10.82 | 26.94 | 77.68 | 36.81 | 0.10 | 1.60 |
| 1 | 5 | 600 | 11.86 | 32.40 | 70.48 | 0.20 | 0.03 | 1.04 |
| 2 | 10 | 600 | 11.41 | 30.56 | 70.49 | 0.22 | 0.07 | 1.09 |
| 3 | 20 | 600 | 11.54 | 30.56 | 76.56 | 0.21 | 0.10 | 0.82 |
| 4 | 30 | 600 | 11.02 | 25.61 | 64.93 | 0.10 | None Detectable | 1.00 |
| 5 | 40 | 600 | 12.30 | 29.48 | 66.31 | 0.16 | None Detectable | 1.23 |
| 6 | 5 | 900 | 13.65 | 38.11 | 79.54 | 0.26 | 0.17 | 1.55 |
| 7 | 10 | 900 | 13.62 | 35.91 | 79.85 | 0.24 | 0.13 | 1.76 |
| 8 | 20 | 900 | 13.18 | 34.74 | 84.34 | 0.18 | 0.05 | 1.70 |
| 9 | 30 | 900 | 12.94 | 30.27 | 75.33 | 0.15 | 0.10 | 2.33 |
| 10 | 40 | 900 | 12.71 | 35.45 | 85.24 | 0.23 | None Detectable | 1.90 |

### Example 11

A Mexican diatomaceous earth ore for Celite^{®} S product underwent preprocessing for use as a feed material for agglomeration in accordance with the inventions described herein. In doing so, the natural DE was dried and milled to prepare a feed material with the following particle size distribution: d₁₀ of 8.94 µm, d₅₀ of 27.88 µm, and d₉₀ of 68.78 µm. The cristobalite content in the feed DE was 0.18% by weight, and the quartz content was 0.17% by weight.

4 g of calcium aluminate (C270; Almatis, Frankfurt, Germany) was dispersed in 400 g of water. 400 g of the feed diatomaceous earth was then slowly added to the calcium aluminate solution with agitation. After mixing in a Hobart mixer for 20 minutes, the mixture was brushed through a 16-mesh (1.18 mm opening) screen. The oversize particles were broken and forced through the screen by brushing. After drying in a 150°C oven overnight, the material was brushed through a 30-mesh (0.6 mm opening) screen. The screened material had the following particle size distribution: d₁₀ of 9.03 µm, d₅₀ of 24.26 µm, and d₉₀ of 61.60 µm.

30 g of the agglomerated, screened DE material was calcined at 600°C for 30 minutes. The calcined material was then screened through a 50-mesh (0.3 mm opening) screen by shaking to remove oversize particles. The finished product had a particle size distribution of d₁₀ of 13.65 µm, d₅₀ of 38.79 µm, and d₉₀ of 87.82 µm. The product had a cristobalite content of 0.18% by weight, a quartz content of 0.25% by weight (both as measured by x-ray diffraction), a pore volume of 3.1648 mUg, a median pore diameter of 5.7278 microns, a wet density of 16.9 pounds per cubic foot, a permeability of 0.68 Darcy, and a BET surface area of 34.8919 m²/g.

### Example 12

The oven-dried, agglomerated (un-calcined) DE material from Example 11 was screened through a 30-mesh screen by shaking instead of brushing. The oversize particles were discarded as waste. The screened DE material had a particle size distribution of d₁₀ of 9.23 µm, d₅₀ of 24.31 µm, and d₉₀ of 61.34 µm.

30 g of the screened DE material was calcined at 600°C for 30 minutes. The calcined DE material was then screened through a 50-mesh (0.3 mm opening) screen by shaking to remove oversize particles. The finished product had a particle size distribution of d₁₀ of 13.86 µm, d₅₀ of 39.40 µm, and d₉₀ of 86.68 microns. The finished product had a cristobalite content of 0.14% by weight, a quartz content of 0.19% by weight, a pore volume of 3.1627 mL/g, a median pore diameter of 6.6247 microns, a wet density of 16.6 pounds per cubic foot, a permeability of 1.15 Darcy, and a BET surface area of 42.4333 m²/g.

### Example 13

Example 11 was repeated using 12 g of calcium aluminate. The finished product had a particle size distribution of d₁₀ of 12.61 µm, d₅₀ of 36.90 µm, and d₉₀ of 86.24 µm. The finished product had a cristobalite content of 0.13% by weight, a quartz content of 0.22% by weight, a wet density of 16.6 pounds per cubic foot, a permeability of 0.46 Darcy, and a BET surface area of 34.8919 m²/g.

### Example 14

Example 12 was repeated using 12 g of calcium aluminate. The finished product had a particle size distribution of d₁₀ of 13.17 µm, d₅₀ of 37.07 µm, and d₉₀ of 84.51 µm. The finished product had a cristobalite content of 0.14% by weight, a quartz content of 0.27% by weight, a wet density of 17.1 pounds per cubic foot, a permeability of 0.81 Darcy, and a BET surface area of 36.3254 m²/g.

**Table 2**

| Example | Calcium Aluminate (%) | Calcination Temperature (°C) | d₁₀ | d₅₀ | d₉₀ | Cristobalite (%) | Quartz (%) | Permeability (Darcy) | Surface Area (m²/g) |
|---|---|---|---|---|---|---|---|---|---|
| Standard Super-Cel^{®} | n/a | n/a | 7.53 | 18.92 | 55.73 | 17.99 | 0.86 | 0.21 | 5.1638 |
| Celite S^{®} | n/a | 600 | | | | | | 0.05 | |
| Hyflo Super-Cel^{®} | n/a | n/a | 10.82 | 26.94 | 77.68 | 36.81 | 0.10 | 1.60 | 2.5122 |
| 11 | 1 | 600 | 13.65 | 38.79 | 87.82 | 0.18 | 0.25 | 0.42 | 34.8919 |
| 12 | 1 | 600 | 13.86 | 39.40 | 86.82 | 0.14 | 0.19 | 1.15 | 42.4333 |
| 13 | 3 | 600 | 12.61 | 36.90 | 86.24 | 0.13 | 0.22 | 0.46 | 34.8919 |
| 14 | 3 | 600 | 13.17 | 37.03 | 84.51 | 0.14 | 0.27 | 0.81 | 36.3254 |

As demonstrated by the results shown in Tables 1 and 2, diatomaceous earth products were generated having comparable permeabilities and decreased cristobalite contents when compared to commercially available diatomaceous earth products having similar permeability. While the comparative diatomaceous products have cristobalite contents of 17.99% and 36.81% by weight, the inventive diatomaceous earth products listed in Tables 1 and 2 surprisingly and unexpectedly exhibited cristobalite contents ranging from 0.10 to 0.26% by weight. Without wishing to be bound by theory, the data suggested that aluminate materials, such as calcium aluminate, may be used to effectively bind diatomaceous earth particles without corresponding formation of cristobalite.

### Example 15

In this Example, commercially available Celite^{®} S diatomite product (originating from Mexico) was used for comparison and as the basis for two products made according to the present inventions. Products 15A and 15 B were prepared with 1% and 5%, respectively, by weight calcium aluminate solutions. Both Products 15A and 15B were calcined at 600°C.

X-Ray Fluorescence (XRF) analysis was preformed on the raw ore and Products 15A and 15B, using a "pressed binder matrix" XRF method. A 3 g diatomite sample was added to 0.75 g of Spectroblend^{®} binder (sold by Chemplex). The mixture was milled by shaking for 5 minutes in a tungsten carbide mixing vial with an impact ball. The resulting mixture was then pressed in a 31 mm die to 24,000 pounds per square inch (165 MPa) to form a pellet. Chemical composition was then determined using a Thermo ARL ADVANT'XP XRF spectrometer equipped with a 60 KV rhodium target X-ray source. Peak intensities from spectra were analyzed by lineshape analysis comparison with single element reference spectra. The peak intensities for the diatomite standards were then converted into pure element count rates that were then used for determining element contents in samples, by peak intensity and data fitting.

Table 3 depicts the XRF chemical analysis of Celite S^{®} ore compared to two DE products. As shown in Table 3, as the percentage of calcium-aluminate binder increased, the amount of calcium (CaO) and the amount of aluminum (Al₂O₃) increased in the finished products.

**Table 3**

| | Na₂O (%) | MgO (%) | Al₂O₃ (%) | SiO₂ (%) | P₂O₅ (%) | SO₃ % | Cl (%) | K₂O (%) | CaO (%) | TiO₂ (%) | MnO (%) | Fe₂O₃ (%) | Total (%) |
|---|---|---|---|---|---|---|---|---|---|---|---|---|---|
| Celite S^{®} ore | 0.08 | 0.23 | 6.09 | 89.60 | 0.03 | 0.05 | 0.00 | 0.31 | 0.65 | 0.29 | 0.01 | 2.64 | 100.00 |
| 15A | 0.09 | 0.24 | 6.35 | 89.09 | 0.03 | 0.02 | 0.00 | 0.30 | 0.90 | 0.28 | 0.02 | 2.68 | 100.00 |
| 15B | 0.08 | 0.24 | 8.73 | 86.20 | 0.04 | 0.13 | 0.00 | 0.30 | 1.86 | 0.26 | 0.01 | 2.16 | 100.00 |

### Example 16

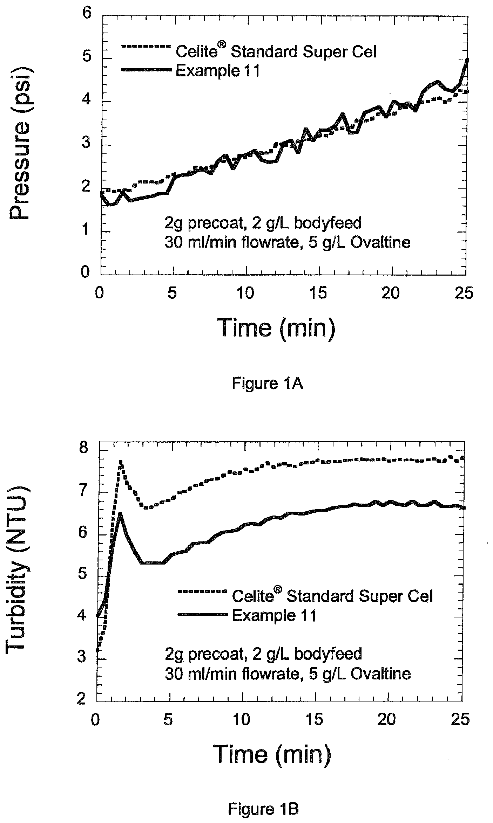

A sample of the diatomite product of Example 11 was tested for filtration performance as a filter aid composition using a pressure filtration process. The diatomite sample was applied to a septum (often referred to as "pre-coating") and added directly to the fluid (often refereed to as "body-feeding"). A Walton filter from Celite Corporation was used for the pressure filtration. 2 g of the sample was used as the pre-coat, and 4 g of the sample was added as body-feed, to 2 liters of solution containing 10 g of OVAL TINE^{®} fine chocolate. The flow rate was controlled at 30 ml/min. The same test was run with Celite^{®} Standard Super Cel^{®} as the filter aid composition as a comparison. As illustrated in FIGURES 1A and 1B, the pressure increase for the sample from Example 11 was similar to Celite^{®} Standard Super Cel^{®}, but the turbidity was about 25% lower for the sample from Example 11. The decreased turbidity using the inventive sample indicates that the inventive sample of Example 11 displays improved filtration over the commercially available Celite^{®} Standard Super Cel^{®} filter aid.

### Example 17

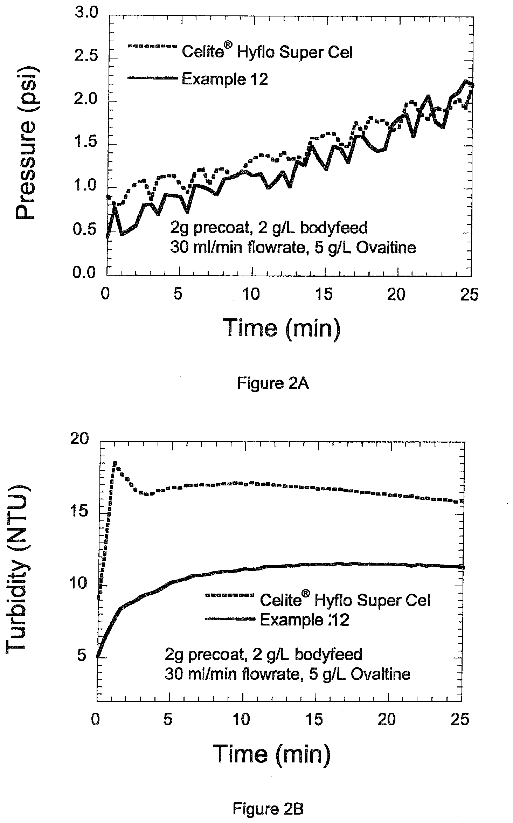

The filtration performance test described in Example 16 was repeated for a sample of the diatomite product of Example 12, with Celite^{®} Hyflo^{®} Super Cel^{®} as a comparison. As illustrated in FIGURES 2A and 2B, the pressure increase for the sample from Example 12 was similar to Celite^{®} Hyflo^{®} Super Cel^{®}, but the turbidity was about 30% lower for the sample from Example 12.

### Example 18

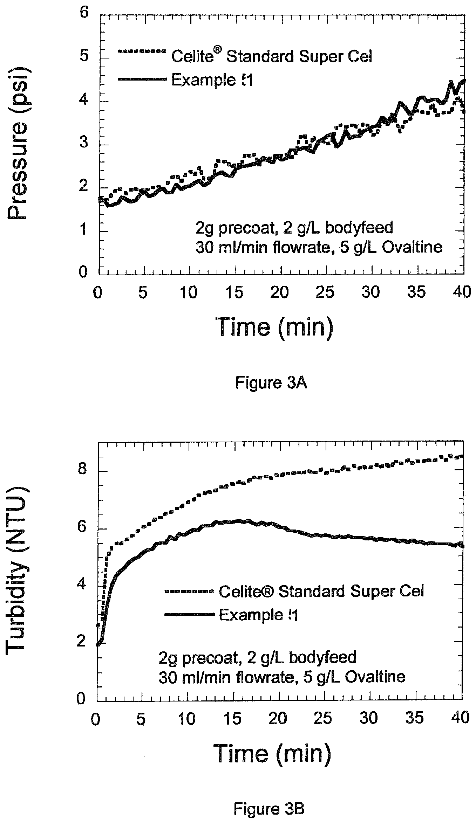

The filtration performance test described in Example 16 was repeated for a sample of the diatomite product of Example 1, with Celite^{®} Hyflo^{®} Super Cel^{®} as a comparison. As illustrated in FIGURES 3A and 3B, the pressure increase for the sample from Example 1 was similar to Celite^{®} Hyflo^{®} Super Cel^{®}, but the turbidity was much lower for the sample from Example 1.

### Example 19

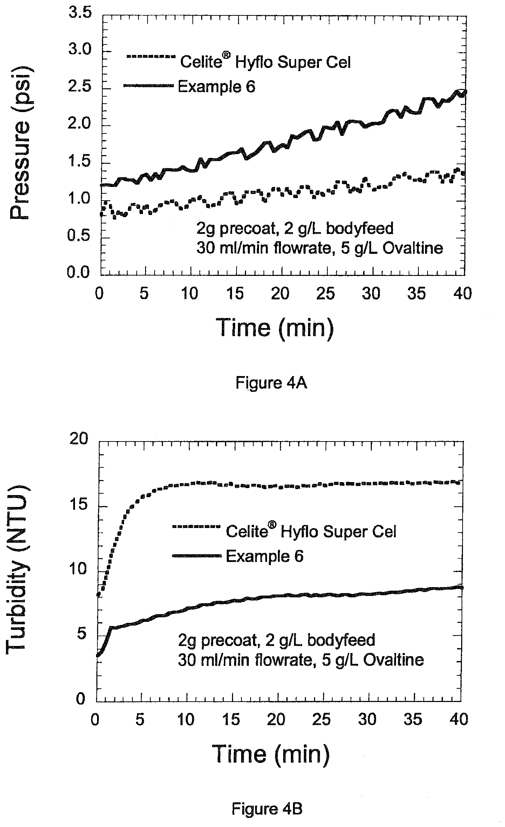

The filtration performance test described in Example 16 was repeated for a sample of the diatomite product of Example 6, with Celite^{®} Hyflo^{®} Super Cel^{®} as a comparison. As illustrated in FIGURES 4A and 4B, the pressure increase for the sample from Example 6 was higher compared to Celite^{®} Hyflo^{®} Super Gel^{®}, but the turbidity was about 50% lower for the sample from Example 6.

### Example 20

The effect of calcination temperature on beer soluble metals of the agglomerated, finished DE product of Example 11 was examined. Four samples were prepared and each was calcined at the temperature listed in Table 4 for 30 minutes. The beer soluble metals were measured in parts per million ("ppm") accordance with methods promulgated by the European Beverage Commission ("EBC") standard (for BSI) or by a EBD process modified with an ICP Spectrometer (for BSA and BSC).

The EBC method used contacted liquid potassium hydrogen phthalate with 5 g of the DE Product from Example 11 and subsequently measured the liquid for iron content. More specifically, the EBC method used a 10 g/L solution of potassium hydrogen phthalate as the extractant with a total contact time of 2 hours. Extracts were then analyzed for iron concentration by the FERROZINE method. The same EBC soluble solution was used for measuring beer soluble aluminum and calcium, for which an Applied Research Laboratories ICP Spectrometer was used to measure the respective concentrations. The operating parameters for the spectrometer were 394.401 nm for aluminum and 317.933 nm for calcium. The results and, for comparison, the metals solubility for commercially available Cefite^{®} Standard Super-Cel^{®} are provided in Table 4.

**Table 4**

| | Calcination Temperature (°C) | EBC Fe (ppm) | EEiC AI (ppm) | EBC Ca (ppm) |
|---|---|---|---|---|
| Celite^{®} Standard Super-Cel^{®} | n/a | 99 | 94 | 277 |
| Sample 1 | 600 | 141 | 819 | 1173 |
| Sample 2 | 700 | 118 | 580 | 837 |
| Sample 3 | 800 | 108 | 431 | 650 |
| Sample 4 | 900 | 111 | 352 | 485 |

Table 4 shows that, as the calcination temperature increased, the level of soluble Fe, Al, and Ca in the diatomaceous earth products decreased and at all temperatures remained sufficiently low for use as filter aids in the beverage filtration industry.

For the avoidance of doubt, the present application extends to the subject-matter in the following numbered paragraphs 1 to 44:
Paragraph 1. A process for preparing a diatomaceous earth product comprising: agglomerating at least one natural diatomaceous earth material with at least one aluminate material; and
   subjecting the agglomerated diatomaceous earth material to at least one heat treatment at a temperature ranging from about 600°C to about 900°C.
Paragraph 2. The process according to paragraph 1, further comprising subjecting the at least one natural diatomaceous earth material to at least one classification step prior to agglomerating.
Paragraph 3. The process according to paragraph 1, further comprising subjecting the agglomerated diatomaceous earth material to at least one classification step prior to the at least one heat treatment.
Paragraph 4. The process according to paragraph 1, further comprising subjected the heat treated diatomaceous earth to at least one classification step.
Paragraph 5. The process according to paragraph 1, wherein the step of agglomerating comprises:
   preparing at least one aqueous solution comprising the at least one aluminate material; and
   contacting the at least one natural diatomaceous earth material with the at least one aqueous solution.
Paragraph 6. The process of paragraph 5, wherein the contacting is by mixing.
Paragraph 7. The process according to paragraph 5, wherein the aqueous solution is about 1% to about 10% by weight of the at least one aluminate material.
Paragraph 8. The process according to paragraph 7, wherein the aqueous solution is about 1% to about 5% by weight of the at least one aluminate material.
Paragraph 9. The process according to paragraph 5, wherein the step of contacting comprises spraying the at least one aqueous solution onto the at least one natural diatomaceous earth material.
Paragraph 10. The process according to paragraph 1, wherein the at least one aluminate material is chosen from the group consisting of at least one alkali metal aluminate material and at least one alkaline-earth metal aluminate material.
Paragraph 11. The process according to paragraph 10, wherein the at least one alkali metal aluminate material is chosen from the group consisting of at least one sodium aluminate material and at least one potassium aluminate material.
Paragraph 12. The process according to paragraph 10, wherein the at least one alkaline-earth metal aluminate material is chosen from the group consisting of at least one calcium aluminate material and at least one magnesium aluminate material.
Paragraph 13. The process according to paragraph 5, where about 0.25 parts to about 1.5 parts of the at least one aqueous solution is contacted with about 1 part of the at least one natural diatomaceous earth material.
Paragraph 14. The process according to paragraph 13, where about 1 part of the at least one aqueous solution is contacted with about 1 part of the at least one natural diatomaceous earth material.
Paragraph 15. The process according to paragraph 1, wherein the diatomaceous earth product has a permeability ranging from about 0.2 darcy to about 2.5 darcy.
Paragraph 16. The process according to paragraph 1, wherein the diatomaceous earth product has a d₁₀ ranging from about 10 µm to about 15 µm.
Paragraph 17. The process according to paragraph 1, wherein the diatomaceous earth product has a d₅₀ ranging from about 20 µm to about 45 µm.
Paragraph 18. The process according to paragraph 1, wherein the diatomaceous earth product has a d₉₀ ranging from about 60 µm to about 100 µm.
Paragraph 19. The process according to paragraph 1, wherein the diatomaceous earth product has a quartz content less than about 0.5% by weight.
Paragraph 20. The process according to paragraph 1, wherein the diatomaceous earth product has a cristobalite content less than about 1% by weight.
Paragraph 21. The process according to paragraph 1, wherein the diatomaceous earth product has a pore volume ranging from about 2.5 mL/g to about 3.7 ml/g.
Paragraph 22. The process according to paragraph 1, wherein the diatomaceous earth product has a median pore diameter ranging from about 4.5 µm to about 7.5 µm.
Paragraph 23. The process according to paragraph 1, wherein the diatomaceous earth product has a wet density ranging from about 240 g/L (15 lb/ft³) to about 320 g/L (20 lb/ft³).
Paragraph 24. The process according to paragraph 1, wherein the diatomaceous earth has a beer soluble iron content of less than about 150 ppm, as measured by EBC.
Paragraph 25. The process according to paragraph 1, wherein the diatomaceous earth has a beer soluble aluminum content of less than about 850 ppm, as measured by EBC and spectrometry.
Paragraph 26. The process according to paragraph 1, wherein the diatomaceous earth has a beer soluble calcium content of less than about 1200 ppm, as measured by EBC and spectrometry.
Paragraph 27. A calcined diatomaceous earth product comprising at least one aluminate material, wherein the product has a cristobalite content of less than 1% by weight.
Paragraph 28. The calcined diatomaceous earth product of paragraph 27, comprising a quartz content of less than 0.5% by weight.
Paragraph 29. The calcined diatomaceous earth product of paragraph 27, wherein the product has a permeability ranging from about 0.2 darcy to about 2.5 darcy.
Paragraph 30. The calcined diatomaceous earth product of paragraph 27, wherein the at least one aluminate material is chosen from the group consisting of at least one alkali metal aluminate material and at least one alkaline-earth aluminate material.
Paragraph 31. The calcined diatomaceous earth product of paragraph 27, wherein the product has a beer soluble iron content of less than about 150 ppm, as measured by EBC.
Paragraph 32. The calcined diatomaceous earth product of paragraph 27, wherein the product has a beer soluble aluminum content of less than about 850 ppm, as measured by EBC and spectrometry.
Paragraph 33. The calcined diatomaceous earth product of paragraph 27, wherein the product has a beer soluble calcium content of less than about 1200 ppm, as measured by EBC and spectrometry.
Paragraph 34. A filter aid composition comprising the calcined diatomaceous earth product of paragraph 1.
Paragraph 35. The filter aid composition of paragraph 34, further comprising at least one additional filter aid.
Paragraph 36. A filter aid composition comprising the calcined diatomaceous earth product of paragraph 27.
Paragraph 37. A method of filtering at least one liquid, comprising passing the at least one liquid through at least one filter membrane comprising the calcined diatomaceous earth product of paragraph 1.
Paragraph 38. The method of paragraph 37, wherein the at least one liquid is chosen from a beverage, an edible oil, an a fuel oil.
Paragraph 39. The method of paragraph 38, wherein the beverage is wine.
Paragraph 40. A method of filtering at least one liquid, comprising passing the at least one liquid through at least one filter membrane comprising the calcined diatomaceous earth product of paragraph 27.
Paragraph 41. The method of paragraph 40, wherein the at least one liquid is chosen from a beverage, an edible oil, and a fuel oil.
Paragraph 42. The method of paragraph 41, wherein the beverage is wine.
Paragraph 43. The process according to paragraph 1, wherein the diatomaceous earth product has a BET surface area ranging from about 15 m²/g to about 50 m²/g.
Paragraph 44. The calcined diatomaceous earth product of paragraph 27, wherein the product has a BET surface area ranging from about 15 m²/g to about 50 m²/g.

## Claims

1. A process for preparing a diatomaceous earth product comprising:
agglomerating at least one natural diatomaceous earth material with at least one aluminate material; and
subjecting the agglomerated diatomaceous earth material to at least one heat treatment at a temperature ranging from 600°C to 900°C.

2. The process according to claim 1, wherein the step of agglomerating comprises:
preparing at least one aqueous solution comprising the at least one aluminate material; and
contacting the at least one natural diatomaceous earth material with the at least one aqueous solution.

3. The process according to claim 2, wherein the aqueous solution is 1% to 10% by weight of the at least one aluminate material.

4. The process according to claim 3, wherein the aqueous solution is 1% to 5% by weight of the at least one aluminate material.

5. The process according to claim 2, wherein the step of contacting comprises spraying the at least one aqueous solution onto the at least one natural diatomaceous earth material.

6. The process according to claim 1, wherein the at least one aluminate material is chosen from the group consisting of at least one alkali metal aluminate material and at least one alkaline-earth metal aluminate material.

7. The process according to claim 1, wherein the diatomaceous earth product has a permeability ranging from 0.2 darcy to 2.5 darcy.

8. The process according to claim 1, wherein the diatomaceous earth product has a quartz content less than 0.5% by weight.

9. The process according to claim 1, wherein the diatomaceous earth product has a cristobalite content less than 1% by weight.

10. The process according to claim 1, wherein the diatomaceous earth product has a pore volume ranging from 2.5 mL/g to 3.7 ml/g.

11. The process according to claim 1, wherein the diatomaceous earth product has a median pore diameter ranging from 4.5 µm to 7.5 µm.

12. The process according to claim 1, wherein the diatomaceous earth product has a wet density ranging from 240 g/L (15 lb/ft³) to 320 g/L (20 lb/ft³).

13. The process according to claim 1, wherein the diatomaceous earth has a beer soluble iron content of less than 150 ppm, as measured by European Beverage Convention (EBC).

14. The process according to claim 1, wherein the diatomaceous earth has a beer soluble aluminum content of less than 850 ppm, as measured by EBC and spectrometry.

15. The process according to claim 1, wherein the diatomaceous earth has a beer soluble calcium content of less than 1200 ppm, as measured by EBC and spectrometry.

## Patentansprüche

1. Verfahren zur Herstellung eines Diatomeenerde-Produkts, umfassend: mindestens ein natürliches Diatomeenerde-Material mit mindestens einem Aluminat-Material agglomerieren; und das agglomerierte Diatomeenerde-Material bei einer Temperatur zwischen 600 °C und 900 °C mindestens einer Wärmebehandlung unterziehen.

2. Verfahren gemäß Anspruch 1, wobei der Schritt des Agglomerierens umfasst:
mindestens eine wässrige Lösung mit mindestens einem Aluminat-Material herstellen; und
mindestens ein natürliches Diatomeenerde-Material mit mindestens einer wässrigen Lösung in Kontakt bringen.

3. Verfahren gemäß Anspruch 2, wobei der Gewichtsanteil der wässrigen Lösung von mindestens einem Aluminat-Material zwischen 1 und 10% liegt.

4. Verfahren gemäß Anspruch 3, wobei der Gewichtsanteil der wässrigen Lösung von mindestens einem Aluminat-Material zwischen 1 und 5% liegt.

5. Verfahren gemäß Anspruch 2, wobei der Schritt der Kontaktierung das Sprühen mindestens einer wässrigen Lösung auf mindestens ein natürliches Diatomeenerde-Material umfasst.

6. Verfahren gemäß Anspruch 1, wobei, wobei mindestens ein Aluminat-Material aus mindestens einem Alkalimetall-Aluminat-Material und mindestens einem Erdalkalimetall-Aluminat-Material ausgewählt wird.

7. Verfahren gemäß Anspruch 1, wobei das Diatomeenerde-Produkt eine mechanische Permeabilität zwischen 0,2 Darcy und 2,5 Darcy aufweist.

8. Verfahren gemäß Anspruch 1, wobei das Diatomeenerde-Produkt einen Quarzgehalt von weniger als 0,5 Gewichtsprozent aufweist.

9. Verfahren gemäß Anspruch 1, wobei das Diatomeenerde-Produkt einen Cristobalitgehalt von weniger als 1 Gewichtsprozent aufweist.

10. Verfahren gemäß Anspruch 1, wobei das Diatomeenerde-Produkt ein Porenvolumen zwischen 2,5 ml/g und 3,7 ml/g aufweist.

11. Verfahren gemäß Anspruch 1, wobei das Diatomeenerde-Produkt einen mittleren Porendurchmesser zwischen 4,5 µm und 7,5 µm aufweist.

12. Verfahren gemäß Anspruch 1, wobei das Diatomeenerde-Produkt eine Nassdichte von 240 g/l (15 lb/ft³) bis 320 g/l (20 lb/ft³) aufweist.

13. Verfahren gemäß Anspruch 1, wobei das Diatomeenerde-Produkt entsprechend der Maßeinheit European Brewery Convention (EBC) einen bierlöslichen Eisengehalt von weniger als 150 Teilen pro Million aufweist.

14. Verfahren gemäß Anspruch 1, wobei das Diatomeenerde-Produkt entsprechend der Maßeinheit EBC und Spektrometrie-Messungen einen bierlöslichen Aluminiumgehalt von weniger als 850 Teilen pro Million aufweist.

15. Verfahren gemäß Anspruch 1, wobei das Diatomeenerde-Produkt entsprechend der Maßeinheit EBC und Spektrometrie-Messungen einen bierlöslichen Calciumgehalt von weniger als 1200 Teilen pro Million aufweist.

## Revendications

1. Un processus pour préparer un produit de la terre à diatomées comprenant :
l'agglomération d'une matière naturelle de la terre à diatomées au moins avec au moins une matière en aluminate ; et
la soumission de la matière de la terre à diatomées à au moins un traitement de chaleur à une température variant de 600 °C à 900 °C.

2. Le processus selon la revendication 1, dans lequel l'étape de l'agglomération comprend :
la préparation d'une solution aqueuse au moins comprenant au moins la matière en aluminate ; et
le contact d'une matière de la terre à diatomées au moins avec au moins une solution aqueuse.

3. Le processus selon la revendication 2, dans lequel la solution aqueuse est de 1 % à 10 % par le poids d'une matière en aluminate au moins.

4. Le processus selon la revendication 3, dans lequel la solution aqueuse est de 1 % à 5 % par le poids d'une matière en aluminate au moins.

5. Le processus selon la revendication 2, dans lequel l'étape du contact comprend la pulvérisation de la solution aqueuse au moins sur au moins la matière naturelle de la terre à diatomées.

6. Le processus selon la revendication 1, dans lequel au moins une matière en aluminate est choisie à partir du groupe composé d'au moins d'une matière en aluminate de métal alcalin au moins et d'une matière en aluminate de métal alcalino-terreux au moins.

7. Le processus selon la revendication 1, dans lequel le produit de la terre à diatomées a une plage de perméabilité de 0,2 darcy à 2,5 darcy.

8. Le processus selon la revendication 1, dans lequel le produit de la terre à diatomées a une teneur en quartz inférieure à 0,5 % en poids.

9. Le processus selon la revendication 1, dans lequel le produit de la terre à diatomées a une teneur en cristobalite inférieure à 1 % en poids.

10. Le processus selon la revendication 1, dans lequel le produit de la terre à diatomées a un volume poreux variant de 2,5 mL/g à 3,7 ml/g.

11. Le processus selon la revendication 1, dans lequel le produit de la terre à diatomées a un diamètre poreux médian variant de 4,5 µm à 7,5 µm.

12. Le processus selon la revendication 1, dans lequel le produit de la terre à diatomées a une densité humide variant de 240g/L (15lb/ft³) à 320 g/L (20 lb/ft³).

13. Le processus selon la revendication 1, dans lequel la terre à diatomées a une teneur en fer soluble de bière inférieure à 150ppm, tel que mesuré par la Convention européenne sur les boissons (EBC).

14. Le processus selon la revendication1, dans lequel la terre à diatomées a une teneur en aluminium soluble de bière inférieure à 850ppm, tel que mesuré par l'EBC et la spectrométrie.

15. Le processus selon la revendication 1, dans lequel la terre à diatomées a une teneur en calcium soluble de bière inférieure à 1200 ppm, tel que mesuré par l'EBC et la spectrométrie.
